# EUROPEAN PATENT APPLICATION

(11) **EP 1 523 169 A1**
(43) Date of publication of application: **13.04.2005**
(21) Application number: 04104394.4
(22) Date of filing: 10.09.2004
(51) Int. Cl.: H04N 1/387

(54) **Document Copying Apparatus**

(30) Priority: 06.10.2003 KR 2003069127
(71) Applicant: Samsung Electronics Co., Ltd., Suwon-si, Gyeonggi-Do 442-742 (KR)
(72) Inventor: PARK, Sang-cheol, Yeongtong-gu, Suwon-si, Gyeonggi-do (KR); KIM, Yun-su, Gyeonggi-do (KR)
(74) Representative: Read, Matthew Charles

(57) **Abstract**

A copy apparatus having a 180° rotation copy function and a 180° rotation copy method include an input unit (110), a display unit (120), a scanning unit (130) to scan a subject disposed on the script plate to be copied, and converting the scanned script into bitmap data, a storage unit (140) to store the converted bitmap data in a memory location that is assigned for the subject to be copied; and in case of a 180° rotation copy command being inputted from the input unit (110), a control unit (160) to store the converted bitmap data in a memory address of the memory location in descending order. Accordingly, it is possible to copy a subject to be copied with a 180° rotation.

## Description

The present invention relates to a document copying apparatus comprising a document platen, scanning means for scanning a document disposed on the document platen and outputting image data, control means and storage means comprising a plurality of memory locations, having respective memory addresses, for storing the image data.

In general, image-forming apparatuses, such as duplicators, printers, fax machines and multipurpose office appliances having multiple image-forming apparatuses therein, commonly have a scanning function for scanning information recorded on a script (or document).

Typical scanning methods include sheet feed scanning methods and flat bed scanning methods. The sheet feed scanning method is generally used for scanning an individual script, like a general fax. In the sheet feed scanning method, a stationary image sensor scans the script being transported and, if an ADF (Automatic Document Feeder) is additionally installed, it is possible to automatically scan a plurality of scripts. In the flat bed scanning method, which is used in a general photocopier, a movable sensor scans the script secured in position and the script may be a paper sheet or a book.

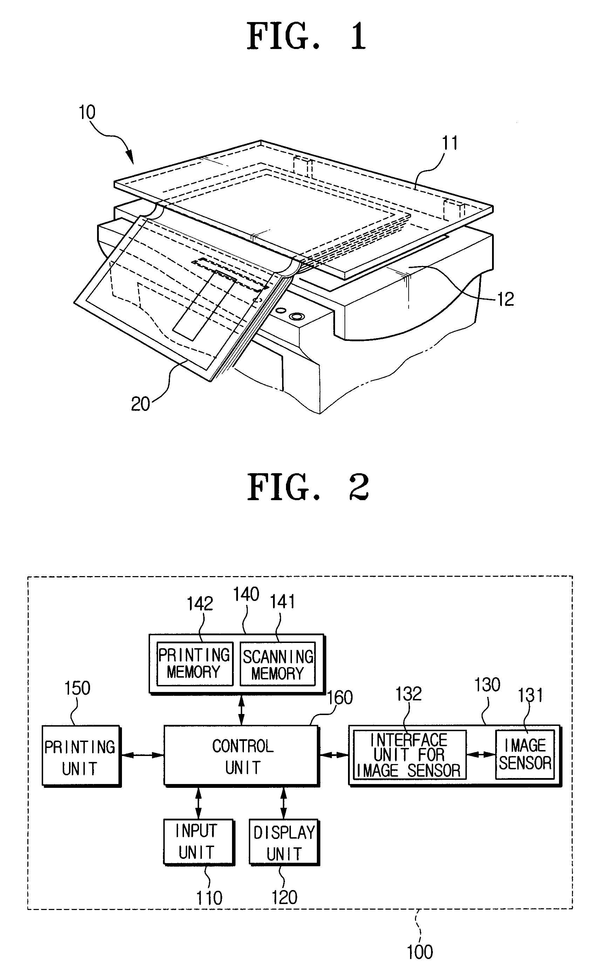

Figure 1 is a perspective view showing a conventional copy apparatus copying an original document, using the flat bed scanning mode. With the conventional copy apparatus 10, the situation shown in Figure 1 sometimes occurs when the original document is a book 20, which is laid on a script plate 12. More specifically, Figure 1 shows a conventional copy apparatus copying a document. Referring to Figure 1, a book 20, which is bigger than the script plate 12 of the copy apparatus 10 when opened is placed on the script plate. Accordingly, since a user cannot make a copy of both the open pages of the book 20, the user must make a copy of each page separately. Due to the position of the cover 11 of the copy apparatus, in order for the user to copy each page of the book, the user must make a copy of one page of the book and then rotate the book through 180° to make a copy of the opposite page so that the opposite page is properly placed on the script plate 12. As a result, when copies of consecutive pages of a book are made, alternate copies are rotated by an angle of 180° with respect to one another. Therefore, the user has to align the copies in a uniform direction. Because the copies of two adjoining pages of the book are at an angle of 180° with respect to one another, there is a disadvantage that the user has to rearrange the copies by rotating every other copy by 180°. This can be very time consuming for the user especially if the original document has multiple pages.

A document copying apparatus, according to the present invention, is characterised in that the control means is operable to store the image data in the storage means in descending order of memory address to invert the scanned image.

According to an aspect of the present invention, there is provided a document copying apparatus comprising a document platen, scanning means for scanning a document on the platen and outputting image data corresponding to the document and image processing means, characterised in that the image processing means is operable to rotate the images produced by alternate scans of the scanning means through an angle of 180°.

According to another aspect of the present invention, there is provided a document copying apparatus comprising a document platen, scanning means for scanning a document on the platen and outputting image data corresponding to the document and image processing means, characterised in that the image processing means is operable to determine whether the document is orientated in a direction opposite to that of a predetermined reference direction based on the image data output from the scanning means and to rotate the image produced by the scanning means through an angle of 180° when it is determined that the document is so orientated.

According to yet another aspect of the present invention, there is provided a method of controlling a document copying apparatus, the method comprising:
performing a plurality of document scans; and
outputting image data associated with each document scan,
**charaterised in that** the image data output from alternate document scans is rotated through an angle of 180°.

According to still another aspect of the present invention, there is provided, a method of controlling a document copying apparatus, the method comprising:
scanning a document; and
outputting image data associated with the scanned document,
**characterised by** determining whether the orientation of the document is opposite to that of a predetermined reference direction and, in the event that it is, processing the image data such that the image is rotated through an angle of 180°.

Embodiments of the present invention will now be described, by way of example, with reference to Figures 2 to 6 of the accompanying drawings, of which:
Figure 1 is a perspective view showing a conventional copying apparatus copying a document;
Figure 2 is a block diagram of an example of a copy apparatus having a 180° rotation function according to the present invention;
Figures 3A to 3D are views illustrating examples of an input unit and a display unit of the copy apparatus of Figure 2 according to the present invention;
Figure 4 is a flowchart illustrating an example of a 180° rotation copy method according to the present invention;
Figure 5 is a flowchart illustrating another example of a 180° rotation copy method according to the present invention; and
Figure 6 is a flowchart illustrating yet another example of a 180° rotation copy method according to the present invention.

Referring to Figure 2, the copy apparatus 100 comprises an input unit 110, a display unit 120, a scanning unit 130, a storage unit 140, a print unit 150 and a control unit 160.

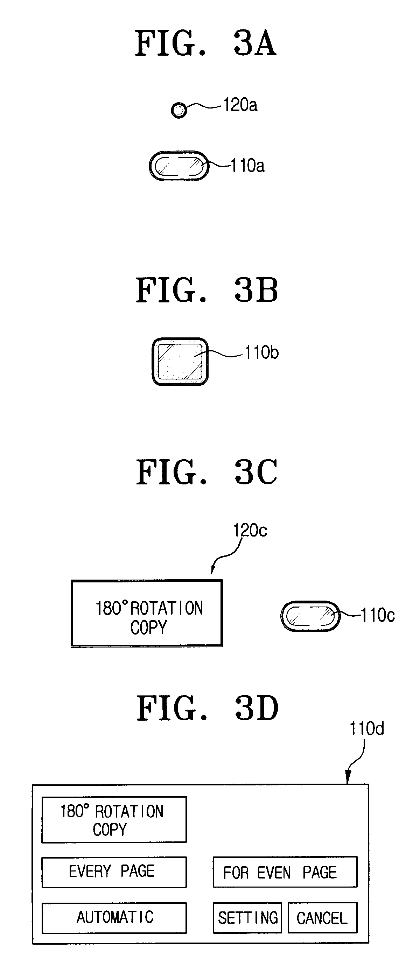

The input unit 110 may include a plurality of function keys for inputting user commands, such as a 180° rotation copy function key. When a certain key is selected using the input unit 110, the control unit 160 can control the copy apparatus 100 in response to the selected key. The display unit 120 can display an operational status of the copy apparatus 100. A display, such as an LCD (Liquid Crystal Display) window or an LED (Light-Emitting Diode), may be used as the display unit 120. A 180° rotation copy toggle key or a 180° rotation copy lamp toggle key, as shown in Figures 3A to 3D, may be used in the input unit 110. The toggle key, having a certain function, can be operated such that the function is turned on to a certain status when the toggle key is pressed once and the function is released (turned off) when the toggle key is pressed a second time. Also, depending on the situation, a touch screen panel (TSP) can be used as the input unit 110 and the display unit 120.

The scanning unit 130 scans an original document placed on a script plate (or document platen) (not shown), such as the script plate 12 in Figure 1, to read the image data therefrom, and converts the read image data into binary coded bitmap data. The scanning unit 130 may include an image sensor 131 and an interface unit 132 for the image sensor 131.

The image sensor 131 can scan the original document to read the image data therefrom. A contact image sensor (CIS) or a charge-coupled device (CCD) may be used as the image sensor 131.

The interface unit 132 can convert the image data read from the image sensor 131 into binary coded bitmap data. Also, the interface unit 132 can transfer the converted bitmap data to a scanning memory 141 under the control of the control unit 160.

The scanning unit 130 may include a read unit (not shown). Using the read unit it may be determined whether the original document is placed on the script plate in a predetermined reference direction or a reverse direction. When the result of the determination indicates that the read image data is disposed in the reference direction, information about the image sensor 131 can be transferred to the control unit 160. If the read image data is disposed reverse to the reference direction, corresponding information can be transferred to the control unit 160. In this embodiment, an O CR (optical character recognition) system can be used as the read unit.

The storage unit 140 can store the converted bitmap data based on the control of the control unit 160 and can also store a control program to control the copy apparatus 100. The storage unit 140 may include the scanning memory 141 and a printing memory 142.

The scanning memory 141 can store the bitmap data converted using the interface unit 132 under the control of the control unit 160. The printing memory 142 receives and stores the bitmap data stored in the scanning memory 141 so that the bitmap data can be transferred to the printing unit 150 to be printed, under the control of the control unit 160.

Typically, the scanning memory 141 and the printing memory 142 may utilize a volatile memory element such as a DRAM. The storage unit 140 may include a non-volatile memory (not shown) which stores various control programs necessary to perform other general operations of the copy apparatus 100.

The printing unit 150 can be operated when the copy apparatus 100 performs a print operation under the control of the control unit 160 and can carry out the print operation on the bitmap data loaded from the printing memory 142 based on a command signal for the print operation.

When the copy apparatus 100 is powered-on, the control unit 160 can control general operations of the copy apparatus 100 according to the control program stored in the non-volatile memory (not shown).

Additionally, the control unit 160 can control the interior of the copy apparatus 100 in response to the user's command input using the input unit 110. When a copy command is input using the input unit 110, the control unit 160 can also control the scanning unit 130 so that the original document can be scanned and the scanned image data can be converted into bitmap data using the interface unit 132. Also, when a command to set a 180° rotation copy function is input via the input unit 110, the control unit 160 can store information about the setting of the function in a predetermined memory location of the storage unit 140 and determine whether or not the 180° rotation copy function has been set in the copy apparatus 100 based on the setting information from the predetermined memory location. As the result of the determination, the control unit 160 can allow the bitmap data to be stored in the scanning memory 141 in sequence or in reverse. Here, the phrase 'the bitmap data is stored in sequence' means that the scanned and binary coded bitmap data is stored in ascending order from the first memory address of the memory location assigned to the subject to be copied. The phrase 'the bitmap data is stored in reverse' means that the scanned and binary coded bitmap data is stored in descending order from the last memory address of the memory location assigned to the subject to be copied.

It should be noted that the present embodiment discloses bitmap data as the converted data for illustrative purposes only and is not to be limited to bitmap data only, but may use any other type of image data that provides the intended aspects and/or features of the invention as disclosed. Also, that the bitmap data is "stored in reverse" means that a second image corresponding to second bitmap data is reversed with respect to the first image corresponding to the first bitmap data. When the first and second images are printed, the second printed image is rotated with respect to the first printed image by a predetermined angle, for example, 180°.

According to the result of the setting determination, the control unit 160 can allow the bitmap data from the scanning memory 141 to be re-stored in reverse or in sequence in the printing memory 142. Here, the phrase 'the bitmap data is re-stored in sequence' means that the bitmap data in the first memory address of the scanning memory 141 is transferred and re-stored to the first memory address of the printing memory 142, and thereafter re-stored in the corresponding memory addresses of the printing memory 142 in ascending order. The term 'the bitmap data is stored in reverse' means that the bitmap data in the first memory address of the scanning memory 141 is transferred and re-stored to the last memory address of the printing memory 142, and thereafter re-stored in the corresponding memory addresses of the printing memory 142 in descending order. Therefore, the bitmap data is stored in reverse when the scanned image corresponding to the bitmap data needs to be rotated by 180°.

When the control unit 160 receives information from the read-out unit (not shown) indicating the subject to be copied is aligned in the same direction as a predetermined reference direction, the control unit 160 can control the storage unit 140 and the printing unit 150 according to the general procedures. On the other hand, when the control unit 160 receives information from the read-out unit indicating that the subject to be copied is aligned in the reverse direction, the control unit 160 can control the storage unit 140 and the printing unit 150 according to the same procedures as those in the case where the command to set a 180° rotation copy function is input using the input unit 110.

Referring to Figure 3A, a 180° rotation copy toggle key 110a can be used as the input unit 110 and a light-emitting lamp 120a can be used as the display unit 120. In this example, when the user presses the 180° rotation copy toggle key 110a to copy a subject to be copied with a 180° rotation, the light-emitting lamp 120a turns on. Thereafter, when the user inputs a copy command for the subject to be copied, the subject to be copied can be copied with a 180° rotation.

Referring to Figure 3B, a 180° rotation copy lamp toggle key 110b is used as the input unit 110 and the display unit 120. When the 180° rotation copy lamp toggle key 110b is pressed once, the 180° rotation copy function can be set and at the same time an LED (not shown) incorporated in the 180° rotation copy lamp toggle key 110b turns on. When the 180° rotation copy lamp toggle key 110b is pressed once again, the 180° rotation copy function can be released and at the same time the LED in the 180° rotation copy lamp toggle key 110b is not supplied with power, thereby turning off the LED.

Referring to Figure 3C, a 180° rotation copy toggle key 110c is used as the input unit 110 and an LCD window 120c is used as the display unit 120. When the 180° rotation copy toggle key 110c is pressed once, a message reading 180° rotation copy' is indicated in the LCD window 120c as shown in Figure 3C, thereby indicating that the 180° rotation copy function has been set. When the 180° rotation copy toggle key 110c is pressed once again, a message reading 'the 180° rotation copy release' is indicated in the LCD window 120c, thereby indicating that the 180° rotation copy function is released.

Referring to Figure 3D, a touch screen panel can be used as the input unit 110 and the display unit 120. In this example, when the user touches a 'copy function list' button (not shown) on the touch screen panel 110d, a sub-menu window can be displayed to allow the user to select additional functions such as '180° rotation copy', 'segmentation copy', 'remove border', 'copy density' or 'taking a margin'. When the user selects the '180° rotation copy' function via the sub-menu window, the sub-menu window 110d, as shown in the Figure 3D, can be displayed. This example can include touch buttons for selecting at least one of an 'every page', 'for even page', 'automatic', 'setting' and 'cancel' function. In the case where the 'every page' function is selected, all of the subjects (or documents) to be copied can be copied with a 180° rotation. When the 'for even page' function is selected, the control unit 160 can count the number of the copied pages and allow the 180° rotation copy function to operate on the even numbered pages of the subject to be copied. Alternatively, when the 'automatic' button is selected, even if the 180° rotation copy function has not been set using the input unit 110, it is automatically determined whether or not the subject to be copied is disposed in a direction opposite to the reference direction. When the subject is disposed in the reverse direction, the 180° rotation copy function is applied.

With the 180° rotation copy function, the even numbered page image is reversed with respect to the odd numbered page image. It is noted that the present embodiment discloses the even numbered page image and the odd numbered page image for illustrative purposes only, and is not to be limited to only the even and odd numbered page image, but may use any numbered page image or sequence that provides the intended aspects and/or features of the invention as disclosed.

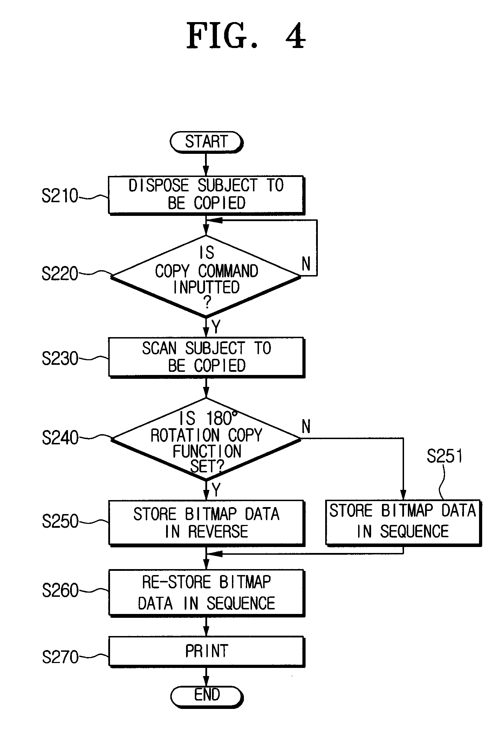

An example of a 180° rotation copy method will now be described with reference to Figure 4.

First of all, the user places the subject to be copied on the script plate (S210) and inputs a copy command (S220). Then, the control unit 160 can control the scanning unit 130 so that the subject to be copied may be scanned and corresponding image data may be read-out therefrom, and the image data may be converted into bitmap data (S230). At this time, the control unit 160 may determine whether or not the 180° rotation copy function has been set using the input unit 110 (S240).

In the case that the 180° rotation copy function has been set, the control unit 160 may allow the converted bitmap data to be stored in the scanning memory 141 on the basis of a prescribed storage unit in descending order (S250). In the case that the 180° rotation copy function has not been set, the control unit 160 may allow the converted bitmap data to be sequentially re-stored in the scanning memory 141 on the basis of the prescribed storage unit (S251).

The control unit 160 can read out the bitmap data stored in the scanning memory 141, transfer the read-out bitmap data to corresponding memory addresses of the printing memory 142 in sequence and have the transferred bitmap data re-stored therein (S260). Therefore, when the 180° rotation copy function has been set, the bitmap data can be re-stored with a 180° rotation relative to the image of the subject to be copied that is actually disposed. Alternatively, when the 180° rotation copy function has not been set, the bitmap data can be re-stored without any rotation relative to the image of the subject to be copied that is actually disposed. When the re-storage of the bitmap data in the printing memory 142 is completed, the control unit 160 can load the re-stored bitmap data and allow the loaded bitmap data to be printed using the printing unit 150 (S370).

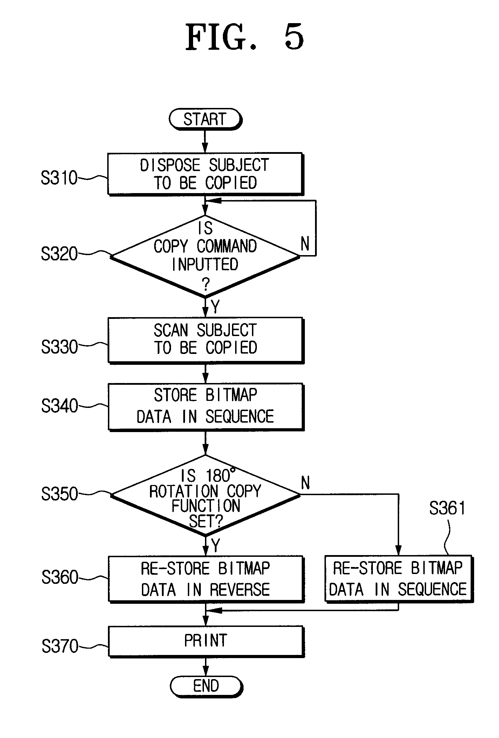

Another example of a 180° rotation copy method will now be described with reference to Figure 5, but the explanation on operations 310, 320, and 330 that overlap with operations 210, 220, and 230 described in Figure 4 will be omitted.

The bitmap data converted in the step 330 can be sequentially stored in the scanning memory 141. At this time, the control unit 160 can determine whether or not the 180° rotation copy function has been set (S350). In the case that the 180° rotation copy function has been set, the control unit 160 can allow the stored bitmap data to be transferred to the printing memory 142 from the scanning memory 141 on a basis of a given storage unit in descending order and to be re-stored therein (S360). On the other hand, in a case that the 180° rotation copy function has not been set, the control unit 160 can allow the stored bitmap data to be sequentially transferred to the printing memory 142 from the scanning memory 141 and to be re-stored therein (S361). Then, the control unit 160 can allow the image data re-stored in the printing memory 142 to be printed on a printing sheet using the printing unit 150 (S370).

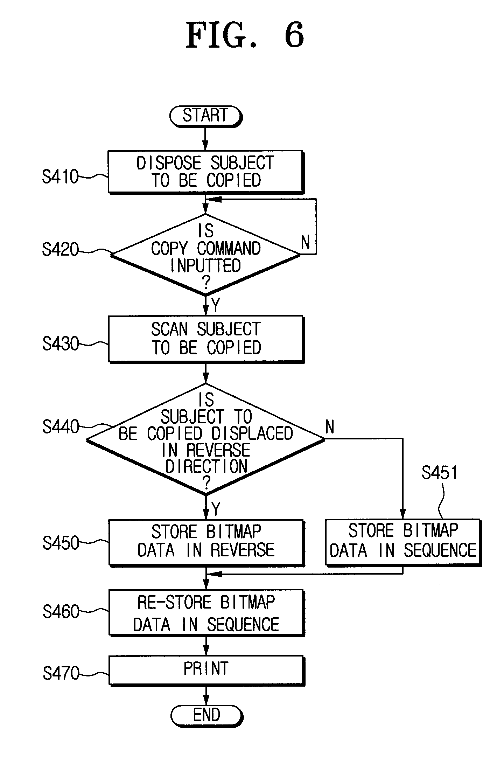

Yet another example of a 180° rotation copy method will now be described with reference to Figure 6, but a description of operations 410, 420, 430, 460 and 470 that overlap with operations 210, 220, 230, 260 and 270 described in Figure 4 will be omitted.

In this example, when the 'automatic' button is selected using the input unit 110 shown in Figure 3D, in operation 430, it is determined whether or not the image data read out has the same direction as a preset reference direction (S440). When it is determined that the image data is disposed in the same direction, the control unit 160 can allow the converted bitmap data to be sequentially stored in the scanning memory 141 (S451). When it is determined that the image data is disposed in the reverse direction, the control unit 160 allow the converted bitmap data to be stored in the scanning memory 141 in descending order (S450).

As described in the above, in accordance with the copy apparatus to which the present method is applied, it is possible to copy the image of a subject to be copied with a 180° rotation. Accordingly, when a user attempts to copy a book using the copy apparatus having even a small script plate, it is possible to prevent one page per two pages from being copied with a 180° rotation. Consequently, when a user attempts to copy a number of subjects to be copied, it is possible to reduce the time and efforts in classifying and rearranging the resulting copies that are rotated by 180°.

## Claims

1. A document copying apparatus comprising:
a document platen,
scanning means (130) for scanning a document disposed on the document platen and outputting image data;
control means (160); and
storage means (140) comprising a plurality of memory locations, having respective memory addresses, for storing the image data,
**characterised in that** the control means (160) is operable to store the image data in the storage means in descending order of memory address to invert the scanned image.

2. A document copying apparatus comprising:
a document platen;
scanning means (130) for scanning a document on the platen and outputting image data corresponding to the document; and
image processing means,
**characterised in that** the image processing means is operable to rotate the images produced by alternate scans of the scanning means (130) through an angle of 180°.

3. A document copying apparatus comprising:
a document platen;
scanning means (130) for scanning a document on the platen and outputting image data corresponding to the document; and
image processing means,
**characterised in that** the image processing means is operable to determine whether the document is orientated in a direction opposite to that of a predetermined reference direction based on the image data output from the scanning means (130) and to rotate the image produced by the scanning means (130) through an angle of 180° when it is determined that the document is so orientated.

4. A method of controlling a document copying apparatus, the method comprising:
performing a plurality of document scans; and
outputting image data associated with each document scan,
**charaterised in that** the image data output from alternate document scans is rotated through an angle of 180°.

5. A method of controlling a document copying apparatus, the method comprising:
scanning a document; and
outputting image data associated with the scanned document,
**characterised by** determining whether the orientation of the document is opposite to that of a predetermined reference direction and, in the event that it is, processing the image data such that the image is rotated through an angle of 180°.

6. A copy apparatus of a flat bed scanning mode having a script plate, comprising:
an input unit through which a 180° rotation copy command is generated;
a display unit;
a scanning unit to scan a subject disposed on the script plate to be copied, and to convert the scanned subject into bitmap data;
a storage unit to store the converted bitmap data in a memory location that is assigned for the subject to be copied; and
a control unit to receive an input of the 180° rotation copy command from the input unit, and to store the converted bitmap data in a memory address of the memory location in a descending order.

7. The copy apparatus of claim 6, wherein the storage unit comprises a scanning memory to store the converted bitmap data in a first memory location that is assigned for the subject to be copied, and the control unit stores the converted bitmap data in the first memory from a last address of the first memory location in descending order when the 180° rotation copy command is inputted through the input unit.

8. The copy apparatus of claim 7, further comprising:
a printing unit,
wherein the control unit controls the printing unit so as to load and print the bitmap data that is stored in descending order when the 180° rotation copy command is inputted through the input unit.

9. The copy apparatus of claim 6, further comprising:
a printing unit;
a scanning memory in the storage unit to store the converted bitmap data in a first memory location that is assigned for the subject to be copied; and
a printing memory in the storage unit to receive the bitmap data stored in the scanning memory and to re-store the bitmap data in a second memory location that is assigned for the subject to be copied.

10. The copy apparatus of claim 9, wherein the control unit re-stores the bitmap data stored in the first memory location in the second memory location from a last address of the second memory location in the descending order when the 180° rotation copy command is inputted through the input unit, and controls the printing unit so as to sequentially load and print the re-stored bitmap data from a first address of the second memory location.

11. The copy apparatus of claim 6, wherein the input unit includes a key to set a 180° rotation copy function, the display unit includes a light-emitting lamp to indicate a 180° rotation copy function, and the control unit controls the light-emitting lamp to emit a light signal when the 180° rotation copy function is set through the setting key.

12. The copy apparatus claim 6, wherein the input unit includes a key to set a 180° rotation copy function; the display unit includes an LCD window; and the control unit controls a message of a 180° rotation copy to be indicated on the LED window when the 180° rotation copy function is set through the setting key.

13. A copy method of performing a copy operation in a copy apparatus having a flat bed scanning mode and a script plate, the method comprising:
receiving an input of a 180° rotation copy command;
scanning a subject disposed on the script plate to be copied, and reading out image data therefrom;
converting the read image data into bitmap data; and
storing the converted bitmap data in a memory location from a last memory address of the memory location that is assigned for the subject to be copied in a descending order.

14. The copy method of claim 13, further comprising:
sequentially loading and printing the stored bitmap data from a first memory address of the memory location.

15. A copy method of performing a copy operation in a copy apparatus having a flat bed scanning mode and a script plate, the method comprising:
receiving an input of a 180° rotation copy command;
scanning a subject disposed on the script plate to be copied, and reading out image data therefrom;
converting the read image data into bitmap data; and
storing the converted bitmap data in a memory location that is assigned for the subject to be copied, loading the bitmap data from a last memory address of the memory location in a descending order, and printing the loaded bitmap data.

16. The copy method of claim 15, wherein the printing operation comprises:
sequentially storing the converted bitmap data in the memory location from a first memory address of the memory location; and
loading the stored bitmap data from the last memory address of the memory location in the descending order, and printing the loaded bitmap data.

17. A copy method of performing a copy operation in a copy apparatus using a flat bed scanning mode having a script plate, the method comprising:
scanning a subject disposed on the script plate to be copied and reading out image data therefrom when a copy command is inputted;
determining whether the read image data has a same direction as preset reference image data;
converting the read image data into bitmap data; and
upon determining that the read image data has the same direction as preset reference image data, storing the converted bitmap data in a memory location from a last memory address of a memory location that is assigned for the subject to be copied in a descending order when the image data read out has the direction reverse to the preset reference image data.

18. The copy method of claim 17, further comprising:
sequentially loading the stored bitmap data from a first memory address of the memory location, and printing the loaded bitmap data.

19. A copy method of performing a copy operation in a copy apparatus using a flat bed scanning mode having a script plate, the method comprising:
scanning a subject disposed on the script plate to be copied, and reading out image data therefrom when a copy command is inputted;
determining whether the read image data has a same direction as preset reference image data;
converting the image data read out into bitmap data; and
upon determining that the read image data has a same direction as preset reference image data, storing the converted bitmap data in a memory location that is assigned for the subject to be copied when the read image data has a direction reverse to the present reference image data, loading the stored bitmap data from a last memory address of the memory location in a descending order, and printing the loaded bitmap data.

20. The copy method of claim 19, wherein the printing operation comprises:
sequentially storing the converted bitmap data beginning from a first memory address of the memory location when the result of the determination indicates that the image data read out has the direction reverse to the preset reference image data; and
loading the stored bitmap data from a last memory address of the memory location in the descending order, and printing the loaded bitmap data.

21. A copy apparatus to scan a subject, comprising:
a scanning unit to scan a subject to be copied, and to convert the scanned subject into data; and
a control unit to control the data so that a printed image corresponding to the data is rotated by a predetermined angle with respect to a reference direction.

22. The copy apparatus of claim 21, wherein the predetermined angle is a 180°.

23. The copy apparatus of claim 21, wherein the data is bitmap data.

24. The copy apparatus of claim 21, wherein the copy apparatus comprises a script plate, and the subject is placed on the script plate that the scanning unit scans the subject on the script plate.

25. The copy apparatus of claim 21, wherein the copy apparatus comprises a flat bed scanning mode, and the subject is placed in a stationary state in the flat bed scanning mode.

26. The copy apparatus of claim 21, wherein the subject is in a stationary state, and the scanning unit moves with respect to the stationary subject.

27. The copy apparatus of claim 21, wherein the controller adjusts the data and outputs the adjusted data to print the printed image rotated with respect to the reference direction.

28. The copy apparatus of claim 21, wherein the subject comprises first and second pages, the data comprises first and second sub-data corresponding to the first and second pages, the printed image comprises first and second sub-printed images corresponding to the first and second sub-data, and the controller controls one of the first and second sub-data to print al least one of the first and second sub-printed images to have the angle with respect to the other one of the first and second sub-printed-images.

29. The copy apparatus of claim 28, wherein the first page is one of even and odd numbered pages, and the second page is the other one of the even and odd numbered pages.

30. The copy apparatus of claim 28, wherein the even and odd numbered pages form the angle.

31. The copy apparatus of claim 28, wherein the even and odd numbered pages are in a reverse relationship.

32. The copy apparatus of claim 28, further comprising:
a memory to store the first and second sub-data,
wherein the controller controls the memory to store the first and second sub-data in different storing orders.

33. The copy apparatus of claim 21, further comprising:
a memory to store the data,
wherein the controller controls the memory to store in one of different storing orders.

34. A copy apparatus to scan a subject to be copied, comprising:
a scanning unit to scan first and second pages of the subject to be copied, and to convert the scanned first and second pages of the subject into first and second data; and
a control unit to control one of the first and second data to have an angle between images corresponding to the first and second data.

35. A copy method of scanning a subject, the method comprising:
scanning the subject to be copied;
converting the scanned subject into data; and
controlling the data so that a printed image corresponding to the data is rotated by a predetermined angle with respect to a reference direction.

36. The copy method of claim 35, wherein the predetermined angle is a 180.

37. The copy method of claim 36, wherein the converting of the scanned subject into the data comprises:
converting of the scanned subject into bitmap data.

38. The copy method of claim 35, further comprising:
moving the scanning unit with respect to the subject which is in a stationary state.

39. The copy method of claim 35, wherein the controlling of the data comprises adjusting the data so that the printed image is rotated with respect to the reference direction.

40. The copy apparatus of claim 35, wherein the subject comprises first and second pages, the data comprises first and second sub-data corresponding to the first and second pages, the printed image comprises first and second sub-printed images corresponding to the first and second sub-data, and the controlling of the data comprises controlling one of the first and second sub-data to print at least one of the first and second sub-printed images to have the angle with respect to the other one of the first and second sub-printed-images.

41. The copy apparatus of claim 40, wherein the controlling of the data comprises:
printing first and second sub-printed images to be in a reverse relationship.

42. The copy apparatus of claim 28, wherein the controlling of the data comprises storing the first and second sub-data in a first storing order and a second storing order, respectively.
